# NEUE EUROPÄISCHE PATENTSCHRIFT

(11) **EP 1 213 081 B2**
(45) Veröffentlichungstag und Bekanntmachung des Hinweises auf die Entscheidung über den Einspruch: **14.03.2012**
(45) Hinweis auf die Patenterteilung: 21.01.2004
(21) Anmeldenummer: 01124556.0
(22) Anmeldetag: 13.10.2001
(51) Int. Cl.: B23D 77/04, B23D 77/06, B23B 51/04, B23C 5/24, B23B 27/00, B23B 27/16

(54) **Werkzeug zur spanenden Feinbearbeitung von Werkstücken**
Material-removing precision machining tool
Outil pour usinage de précision par enlèvement de copeaux

(30) Priorität: 05.12.2000 DE 10060283; 27.02.2001 DE 20103921 U
(43) Veröffentlichungstag der Anmeldung: 12.06.2002
(73) Patentinhaber: MAPAL Fabrik für Präzisionswerkzeuge Dr. Kress KG, D-73431 Aalen (DE)
(72) Erfinder: Kress, Dieter, Dr., 73431 Aalen (DE)
(74) Vertreter: Gleiss, Alf-Olav

(56) Entgegenhaltungen:
- EP-B1- 0 332 596
- DE-A- 4 403 188
- DE-A1- 2 110 078
- DE-A1- 4 136 353
- DE-A1- 19 717 741
- DE-B- 2 806 079
- US-A- 3 195 376
- US-A- 3 339 257
- US-A- 3 662 444
- US-A- 6 155 753
- PATENT ABSTRACTS OF JAPAN vol. 1999, no. 01, 29. Januar 1999 (1999-01-29) -& JP 10 277839 A (MITSUBISHI MATERIALS CORP), 20. Oktober 1998 (1998-10-20)

## Beschreibung

Die Erfindung betrifft ein Werkzeug zur spanenden Feinbearbeitung von Werkstücken gemäß Oberbegriff des Anspruchs 1.

Ein solches Werkzeug ist aus Dokument US-A-3 662 444 bekannt. Es weist mindestens eine Messerplatte auf, mit deren Hilfe Späne von dem Werkstück abgetragen werden, indem eine Relativbewegung zwischen Werkzeug beziehungsweise der Schneide der Messerplatte und dem Werkstück realisiert wird. Meistens wird das Werkzeug in Rotation versetzt, um ein feststehendes Werkstück zu bearbeiten. Die mindestens eine Messerplatte ist mit Hilfe einer Einstellvorrichtung verlagerbar. Es hat sich herausgestellt, dass dabei eine exakte Ausrichtung der Messerplatte nicht oder nur unter erheblichem Aufwand realisierbar ist.

Aufgabe der Erfindung ist es daher, ein Werkzeug zu schaffen, das diesen Nachteil nicht aufweist.

Zur Lösung dieser Aufgabe wird ein Werkzeug vorgeschlagen, das sich durch die in Anspruch 1 genannten Merkmale auszeichnet. Es hat eine ein Verstellelement umfassende Einstellvorrichtung. Das Verstellelement erstreckt sich über einen Bereich einer Seitenfläche der Messerplatte und liegt an dieser an. Eine punktförmige Berührung zwischen Einstellvorrichtung und Messerplatte wird damit vermieden. Gleichzeitig ist aufgrund der Tatsache, dass sich das Verstellelement über einem Bereich der Seitenfläche der Messerplatte erstreckt, eine exakte Positionierung der Messerplatte möglich.

Außerdem ist es vorgeschen, dass das Verstellelement eine mit der Seitenfläche der Messerplatte im Sinne einer flächigen Anlage zusammenwirkende Stellfläche aufweist, die zwei in einem Abstand zueinander angeordnete Anlageflächen umfasst, wobei die Stellfläche einen Neigungswinkel mit einer Mittelebene des Verstellelements einschließt, der auf einen Neigungswinkel der Seitenfläche der Messerplatte abgestimmt ist, an der das Verstellelement anliegt. Mit anderen Worten: Die Stellfläche weist eine Unterbrechung auf, um zwei in einem Abstand zueinander angeordnete Berührungsbereiche zwischen der Messerplatte und dem Verstellelement zu realisieren.

Besonders bevorzugt wird ein Ausführungsbeispiel des Werkzeuges, das sich dadurch auszeichnet, dass die Einstellvorrichtung zwei Verstellelemente aufweist, die auf verschiedene Seitenflächen der Messerplatte einwirken und damit unterschiedliche Einstellrichtungen ermöglicht.

Weitere Ausgestaltungen ergeben sich aus den übrigen Unteransprüchen.

Die Erfindung wird im Folgenden anhand der Zeichnung näher erläutert. Es zeigen:
- Figur 1: eine Prinzipskizze eines Werkzeuges in Vorderansicht;
- Figur 2: einen Ausschnitt des Werkzeugs in Seitenansicht;
- Figur 3: eine erste abgewandelte Form gegenüber dem in Figur 2 dargestellten Werkzeug;
- Figur 4: eine weitere abgewandelte Form des in Figur 2 dargestellten Werkzeuges;
- Figur 5: Ansichten eines Verstellelementes;
- Figur 6: eine Draufsicht auf ein abgewandeltes Ausführungsbeispiel des Verstellelements und
- Figur 7: eine Seitenansicht des in Figur 6 dargestellten Verstellelements.

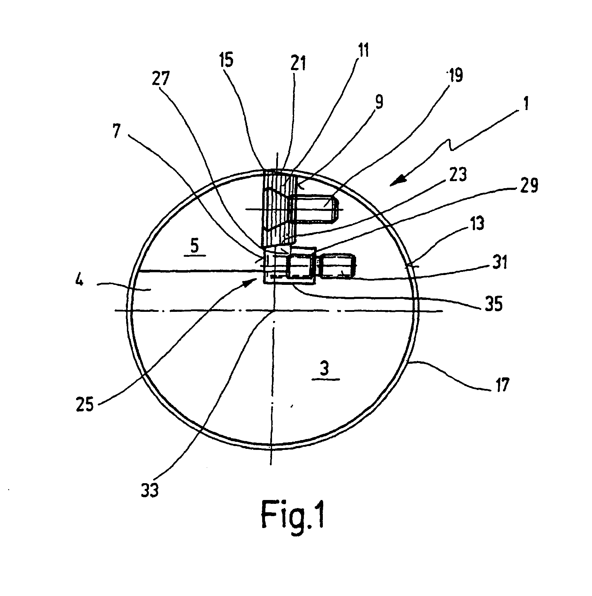

Die Prinzipskizze gemäß Figur 1 zeigt ein Werkzeug 1 in Vorderansicht, also die Stirnseite 3 des Werkzeuges. Der Grundkörper 4 des Werkzeuges 1 ist hier beispielhaft im Wesentlichen zylindrisch ausgebildet. Er ist mit einer Ausnehmung versehen, die sich in Längsrichtung des Werkzeuges 1 erstreckt und als Spanraum 5 dient. In eine Begrenzungsfläche 7 des Spanraumes 5 ist eine Ausnehmung 9 eingebracht, in die eine Messerplatte 11 eingesetzt ist. Eine Kante der Messerplatte 11, die über die Umfangsfläche 13 hinausragt, dient als Schneide 15 und dazu, Späne von einem Werkstück abzutragen. Beispielsweise dient das Werkzeug 1 der Feinbearbeitung einer durch einen Kreis angedeuteten Bohrungsoberfläche 17 in einem Werkstück.

Bei dem hier dargestellten Ausführungsbeispiel ist die Messerplatte 11 mit Hilfe einer Spannschraube 19 am Grundkörper des Werkzeuges 1 befestigt, die die Messerplatte 11 durchdringt und diese mittels eines Schraubenkopfes sicher hält. Es ist auch möglich, die Messerplatte 11 mit Hilfe einer herkömmlichen Spannpratze am Grundkörper des Werkzeuges 1 zu befestigen. Figur 1 zeigt die Messerplatte 11 in Seitenansicht. Es zeigt sich, dass die obere und untere Seitenfläche 21 beziehungsweise 23 konisch zueinander verlaufen und einen spitzen Winkel miteinander einschließen, der sich von rechts nach links öffnet. Dadurch wird ein sogenannter positiver Freiwinkel realisiert: Die Seitenfläche 21 fällt ausgehend von der Schneide 15 von links nach rechts ab, während die untere Seitenfläche 23 von links nach rechts ansteigt.

Mit der unteren Seitenfläche 23 wirkt eine Einstellvorrichtung 25 zusammen, die ein Verstellelement 27 umfasst. Dieses ist mit einer Stellfläche 29 versehen, die an der unteren Seitenfläche 23 der Messerplatte 11 flächig anliegt und von rechts nach links abfällt. Das Verstellelement 27 ist mit Hilfe einer Stellschraube 31 gegenüber der Messerplatte 11 verlagerbar. Durch die untere Seitenfläche 23 und die Stellfläche 29 wird quasi ein Keilgetriebe ausgebildet. Bei einer Verlagerung des Verstellelementes 27 nach links wird die Messerplatte 11 gegenüber der Dreh- beziehungsweise Mittelachse 33 des Werkzeuges 1 in radialer Richtung nach außen verlagert.

Das Verstellelement 27 weist einen vorzugsweise zylindrisch ausgebildeten Ansatz 35 auf, der in einer entsprechenden Ausnehmung im Grundkörper 4 des Werkzeuges 1 untergebracht ist und der Führung des Verstellelementes 27 im Werkzeug 1 dient.

Bei der Darstellung gemäß Figur 1 ist der Grundkörper 4 des Werkzeuges 1 teilweise weggeschnitten, so dass die Spannschraube 19, der Ansatz 35 und die Stellschraube 31 sichtbar sind. Die Stellschraube 31 ist in einer in den Grundkörper 4 eingebrachten Bohrung untergebracht, die sich nach rechts öffnet, also die Umfangsfläche 13 schneidet. Dadurch ist die Stellschraube 31 von rechts frei zugänglich. Es ist jedoch auch möglich, den Spanraum 5 so groß auszubilden, dass die Stellschraube 31 auch von links über den Spanraum 5 zugänglich ist.

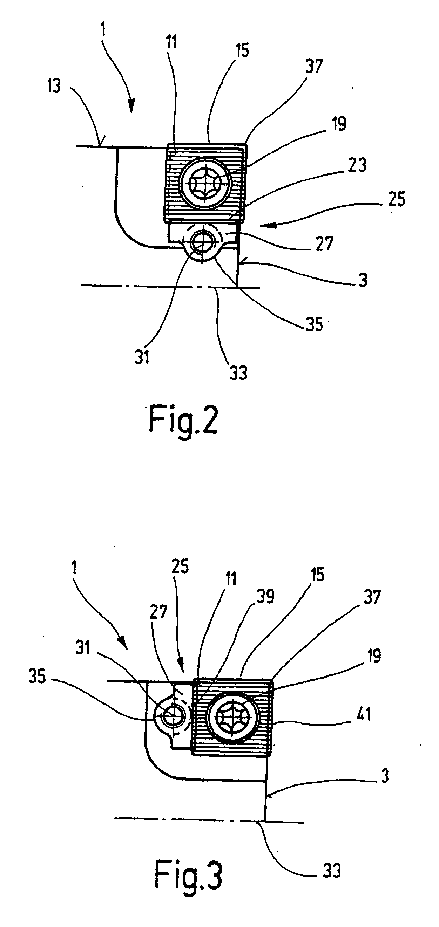

Figur 2 zeigt in Draufsicht den vorderen Teil des Werkzeuges 1 mit der Messerplatte 11, deren obere Längskante die Schneide 15 bildet, wobei die rechte obere Ecke 37 ebenfalls zur Schneide der Messerplatte 11 gehört. Die Messerplatte ist hier beispielhaft im Wesentlichen quadratisch ausgebildet. Sie kann jedoch auch beispielsweise als Parallelogramm oder als Rhombus ausgebildet sein. Deutlich erkennbar ist der Kopf der Spannschraube 19, die die Messerplatte 11 durchdringt und im Grundköper des Werkzeuges 1 verankert ist. Mit deren Hilfe wird die Messerplatte 11 vollflächig gegen den Grund der Ausnehmung 9 angepresst. Deutlich ist hier die Einstellvorrichtung 25 erkennbar, insbesondere das Verstellelement 27, das sich über einen Bereich der unteren Seitefläche 23 der Messerplatte 11 erstreckt. Vorzugsweise reicht das Verstellelement über einen wesentlichen Teil der Seitenfläche der Messerplatte 11, insbesondere praktisch über deren ganze Breite. Auch in der Draufsicht ist der Ansatz 35 erkennbar, der unten über das Verstellelement vorspringt. Die Stellschraube 31 erstreckt sich hier, ebenso wie die Spannschraube 19, senkrecht zur Bildebene von Figur 2.

Aus der Darstellung gemäß Figur 2 ist erkennbar, dass die Einstellvorrichtung 25 ein Verstellelement 27 umfasst, welches bei einer entsprechenden Verlagerung die Messerplatte 11 in einem Winkel von 90° zur Mittelachse 33 verschiebt. Damit ist der Bearbeitungsradius des Werkzeuges 1 einstellbar, also die Größe des Überstandes der Schneide 15 gegenüber der Umfangsfläche 13.

Aus Figur 2 ist erkennbar, dass die Messerplatte 11 auch gegenüber der Stirnseite 3 vorspringt.

Figur 3 zeigt eine erste abgewandelt Form des Werkzeuges 1. Gleiche Elemente sind mit gleichen Bezugsziffern versehen, so dass insofern auf die Beschreibung der Figuren 1 und 2 verwiesen wird.

Das in Figur 3 dargestellte Ausführungsbeispiel unterscheidet sich gegenüber dem in Figur 2 gezeigten ausschließlich dadurch, dass die Einstellvorrichtung 25 nicht zwischen Messerplatte 11 und Mittelachse 33 des Werkzeuges 1 angeordnet ist, sondern an der innenliegenden Seitenfläche 39 der Messerplatte 11, die hier im Wesentlichen senkrecht zur Mittelachse 13 verläuft und parallel zur äußeren Seitenfläche 41, die über die Stirnseite 3 des Werkzeuges 1 vorspringt.

Bei einer Anordnung der Einstellvorrichtung 25 und des zugehörigen Verstellelements 27 gemäß Figur 3 wird mit Hilfe der Stellschraube 31 eine axiale Verschiebung der Messerplatte 11 erreicht, so dass deren äußere Seitenfläche 41 mehr oder weniger über die Stirnseite 3 des Werkzeugs 1 vorspringt.

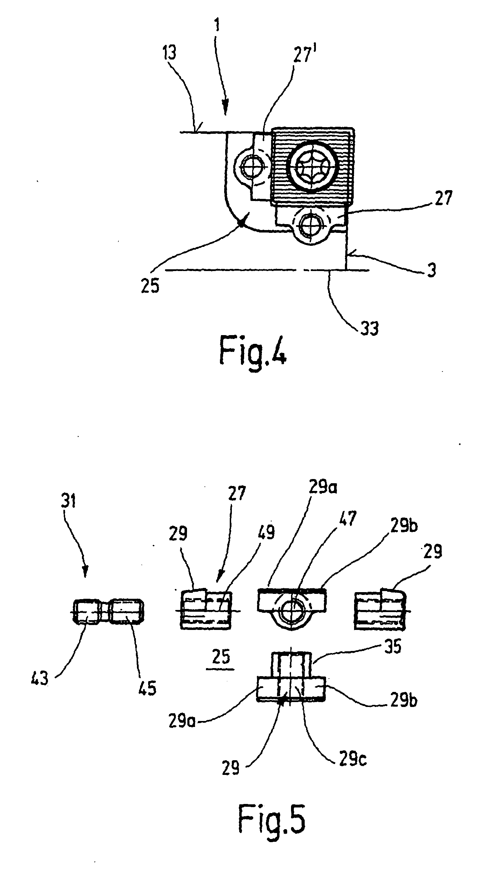

Das in Figur 4 dargestellte abgewandelte Ausführungsbeispiel des Werkzeuges 1 zeichnet sich dadurch aus, dass die Einstellvorrichtung 25 zwei Verstellelemente 27 und 27' aufweist, wobei das erste Verstellelement, wie anhand von Figur 2 erläutert, zwischen Messerplatte 11 und Mittelachse 33 des Werkzeuges angeordnet ist und das zweite Verstellelement 27', wie anhand von Figur 3 erläutert, in einem Abstand zur Stirnseite 3 senkrecht zur Mittelachse 33 verläuft. Es ist damit möglich, den Überstand der Messerplatte sowohl über die Umfangsfläche 13 als auch über die Stirnfläche 3 einzustellen, also den Radius und die Länge des Werkzeuges.

Figur 5 zeigt eines der Verstellelemente, beispielsweise das Verstellelement 27 der Einstellvorrichtung 25, in verschiedenen Ansichten, außerdem die Stellschraube 31. Oben in Figur 5 ist ganz links die Stellschraube 31 in Seitenansicht dargestellt. Es handelt sich hier um eine sogenannte Differenzialschraube, die zwei getrennte Bereiche mit unterschiedlichen Außengewinden aufweist, beispielsweise ist der linke Bereich 43 als Rechtsgewinde und der rechte Bereich 45 als Linksgewinde ausgebildet. Natürlich können die Gewindebereiche auch vertauscht sein. Wesentlich ist, dass es sich hier um Gewindebereiche mit entgegengesetzter Orientierung handelt.

Rechts von der Stellschraube 31 ist das Verstellelement 27 in Seitenansicht dargestellt, wie dies in Figur 1 der Fall ist. Wiederum rechts davon ist das Verstellelement 27 in Vorderansicht dargestellt, wie dies in den Figuren 2 und 4 der Fall ist. Ganz rechts oben ist das Verstellelement 27 wiederum in Seitenansicht gezeigt, hier ist allerdings die linke Seite des Verstellelements 27 wiedergegeben. Unten in Figur 5 ist das Verstellelement 27 in Draufsicht wiedergegeben, so dass auch die Stellfläche 29 in Draufsicht erkennbar ist. Aus der Darstellung gemäß Figur 5 wird der zylindrische Ansatz 35 deutlich, welcher der Führung des Verstellelementes 27 im Grundkörper des Werkzeuges 1 dient. Die der Aufnahme der Stellschraube 31 dienende Bohrung 47 ist bei den verschiedenen Darstellungen des Verstellelementes 27 deutlich erkennbar. Sie durchdringt den Ansatz 35.

In der oberen Reihe von Figur 5 zeigt sich, dass die Stellfläche 29 gegenüber der durch einen Strich angedeuteten Mittelebene 49 des Verstellelementes 27 geneigt ist. Der Neigungswinkel der Stellfläche 29 ist auf den Neigungswinkel der Seitenfläche der Messerplatte 11 abgestimmt, an der das Verstellelement 27 anliegt.

Die Stellfläche 29 wird so ausgebildet, dass sie zwei in einem Abstand zueinander liegende Anlageflächen 29a und 29b aufweist. Der dazwischenliegende Bereich 29c ist gegenüber den benachbarten Bereichen abgesenkt, so dass hier das Verstellelement 27 die zugehörige Seitenfläche der Messerplatte 11 nicht berührt. Durch diese Ausgestaltung wird sichergestellt, dass das Verstellelement 27 flächig an den zugehörigen Seitenflächen der Messerplatte 11 anliegt, so dass eine relativ großflächige Unterstützung der Messerplatte 11 durch die Einstelleinrichtung 25 gewährleistet ist. Insbesondere wird eine mehr oder weniger punktförmige Anlage einer Stellschraube, wie sie herkömmlicherweise verwendet wird, vermieden.

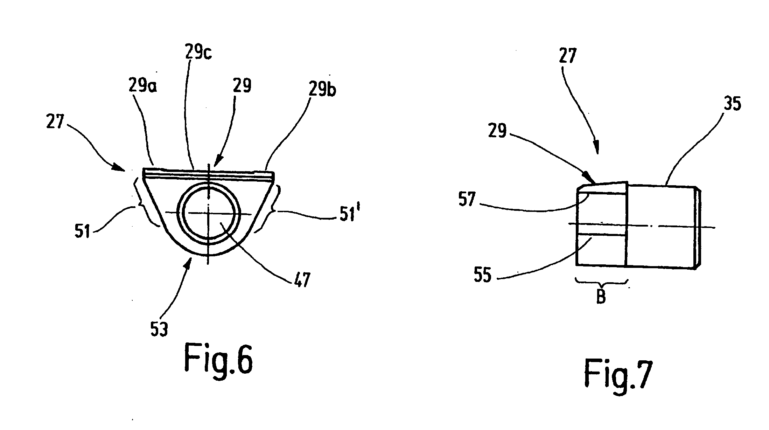

Figur 6 zeigt ein abgewandeltes Ausführungsbeispiel eines Verstellelements 27 in Draufsicht. Teile, die mit den oben beschriebenen übereinstimmen, sind mit gleichen Bezugsziffern versehen, so dass insofern auf die Beschreibung der Figuren 1 bis 5 verwiesen wird.

Das Verstellelement 27 weist eine Stellfläche 29 auf, die, wie anhand von Figur 5 erläutert, zwei in einem Abstand zueinander angeordnete Anlageflächen 29a und 29b aufweist. Zwischen diesen ist ein abgesenkter Bereich 29c vorgesehen, der bei Einsatz des Verstellelements die zugehörige Seitenfläche einer Messerplatte 11 nicht berührt.

Das Verstellelement 27 wird von einer Bohrung 47 durchdrungen, in die eine Spannschraube, die hier nicht dargestellt ist, einsetzbar ist.

Das hier dargestellte Ausführungsbeispiel des Verstellelements 27 zeichnet sich dadurch aus, dass seitlich an die Stellfläche 29 angrenzende Wandbereiche V-förmig ausgebildet sind, wobei sich das V von oben nach unten in Richtung der Stellfläche 29 öffnet. Es ergeben sich damit zwei gegenüberliegende Berührungsflächen 51 und 51', deren Länge dadurch gegeben ist, dass der untere, der Stellfläche 29 gegenüberliegende Bereich 53 abgerundet ist. Als Berührungsflächen werden die geradlinigen Abschnitte zwischen dem Bereich 53 und der Stellfläche 29 der Seitenwand des Verstellelements 27 verwendet.

Der die beiden Berührungsflächen 51, 51' verbindende Bereich 53 ist gekrümmt ausgebildet. Seine Außenkontur folgt vorzugsweise einem Kreisbogen. Der Radius des Kreisbogens ist vorzugsweise größer gewählt als der der Ausnehmung im Grundkörper 4 des Werkzeugs 1, in die das Verstellelement 27 eingesetzt wird. Dadurch ist sichergestellt, dass das Verstellelement 27 den Grundkörper 4 des Werkzeugs 1 lediglich im Bereich der Berührungsflächen 51, 51' berührt.

Durch die V-förmigen Berührungsflächen 51, 51', die mit entsprechenden Anlageflächen im Grundkörper 4 des Werkzeugs 1 zusammenwirken, ergibt sich eine exakte Winkelausrichtung des Verstellelements 27 und damit der Stellfläche 29. Diese exakte Ausrichtung ermöglicht es, die mit dem Verstellelement 27 zusammenwirkende Messerplatte 11 exakt auszurichten und damit beispielsweise den gewünschten Abfall einer Nebenschneide sicherzustellen, die von der Vorderkante einer Messerplatte 11 (siehe beispielsweise Figur 2) nach links abfällt.

Die Seitenansicht des in Figur 7 dargestellten Verstellelements 27 zeigt, dass dieses im Wesentlichen so ausgebildet ist, wie das anhand der Figuren 1 bis 5 erläuterte Verstellelement. Figur 7 lässt die Breite B der Berührungsflächen 51, 51' erkennen. Durch eine erste Linie 55 ist angedeutet, wie weit die Berührungsflächen 51, 51' nach unten reichen. Eine zweite Linie 57 deutet an, dass die Berührungsflächen 51, 51' nicht ganz bis zur Stellfläche 29 reichen müssen.

Wesentlich ist, dass sich das anhand der Figuren 6 und 7 erläuterte Verstellelement 27 dadurch auszeichnet, dass durch V-förmige beziehungsweise prismatische Ausrichtung der Berührungsflächen 51, 51' eine exakte Ausrichtung sowohl des Verstellelements 27 als auch der Stellfläche 29 gegeben ist.

Verstellelemente, wie sie anhand der Figuren 6 und 7 erläutert wurden, können einzeln, wie anhand der Figuren 2 und 3 beschrieben, eingesetzt werden. Es ist aber auch möglich, zwei derartiger Verstellelemente zu verwenden, wie dies anhand von Figur 4 erläutert wurde.

Besonders vorteilhaft ist es, dass die Einstellvorrichtung 25 sehr einfach aufgebaut ist und die Neigung der Seitenflächen der Messerplatte 11, die durch den positiven Freiwinkel gegeben ist, zur Bildung eines Keilgetriebes ausnutzt. Es ist also auf einfache Weise möglich, durch Verlagerung des Verstellelementes 27 und/oder des zweiten Verstellelementes 27' die Messerplatte 11 in Richtung der Mittelachse 33 und/oder in einem Winkel dazu zu verlagern.

Die Größe der Verstellung ist in der Praxis relativ gering und dient im Wesentlichen dazu, Toleranzen in der Herstellung der Messerplatte 11 und/oder der die Messerplatte aufnehmenden Ausnehmung 9 auszugleichen. Außerdem kann mit Hilfe der hier beschriebenen Einstellvorrichtungen ein möglicherweise noch vorhandenes Spiel zwischen Spanschraube 19 und Messerplatte 11 ausgeglichen werden. Insbesondere lässt sich auf einfache Weise eine Setzbewegung der Messerplatte, also eine Verlagerung der Messerplatte 11 bei dem ersten Einsatz des Werkzeuges 1, sicher vermeiden.

Aus den Erläuterungen zu den Figuren 1 bis 7 wird ohne weiteres ersichtlich, dass die hier beschriebene Einstellvorrichtung auch und insbesondere bei Werkzeugen eingesetzt werden kann, die mehrere Messerplatten aufweisen. Mit Hilfe der Einstellvorrichtung 25 können dann auch Maßunterschiede zwischen den verschiedenen Messerplatten ausgeglichen werden, also nicht nur Maßunterschiede, die in der jeweiligen Schneide 15 einer Messerplatte 11 gegeben sind.

Schließlich kann die hier beschriebene Einstellvorrichtung 25 auch zusammen mit Werkzeugen verwendet werden, deren Außenkontur nicht, zumindest nicht durchgehend, zylindrisch ist. In allen Fällen ist gewährleistet, dass die Einstellung der Messerplatte und deren Positionierung optimal vorgegeben werden kann, so dass bei der Feinbearbeitung eines Werkstückes Maßvorgaben exakt eingehalten werden können.

Aus dem Vorstehenden wird deutlich, dass bei einem Drehen der Stellschraube 31 in der einen Drehrichtung das Verstellelement 27 verlagert und aufgrund der keilförmigen Anlage des Verstellelements 27 an der Messerplatte 11 die Messerplatte 11 radial nach außen gedrängt wird, wobei sich die die Messerplatte 11 haltende Spannschraube 19 elastisch verformt. Wird -im Zuge von Einstellarbeiten- die Stellschraube 31 in der anderen Drehrichtung gedreht, so verlagert sich das Verstellelement 27 in die entsprechend andere Richtung, wodurch aufgrund der keilförmigen Anlage an der Messerplatte 11 diese in die radial nach innen gerichtete Position zurückbewegt wird. Diese Bewegung erfolgt aufgrund der elastischen Verformung der Spannschraube 19, in dem sich die bestehende Vorspannung in Anhängigkeit von der Größe der Verlagerung des Verstellelements 27 wieder verkleinert. Es ist somit also nicht erforderlich, die Messerplatte 11 mit einem Werkzeug nach innen zu schlagen, sondern diese Rückverlagerung erfolgt selbsttätig in Abhängigkeit von der Einstellung der Stellschraube 31.

## Patentansprüche

1. Werkzeug zur spanenden Feinbearbeitung von Werkstücken, mit mindestens einer Messerplatte und mit wenigstens einer auf die Messerplatte wirkenden Einstellvorrichtung (25), die ein sich über einen Bereich einer Seitenfläche der Messerplatte (11) erstreckendes Verstellelement (27;27') und eine das Verstellelement gegenüber der Messerplatte verlagernde Stellschraube (31) umfasst, **dadurch gekennzeichnet, dass** das Verstellelement (27;27') eine mit der Seitenfläche der Messerplatte (11) im Sinne einer flächigen Anlage zusammenwirkende Stellfläche (29) aufweist, die zwei in einem Abstand zueinander angeordnete Anlageflächen (29a,29b) umfasst, wobei die Stellfläche (29) einen Neigungswinkel mit einer Mittelebene (49) des Verstellelements (27,27') einschließt, der auf einen Neigungswinkel der Seitenfläche der Messerplatte (11) abgestimmt ist, an der das Verstellelement (27;27') anliegt.

2. Werkzeug nach Anspruch 1, **dadurch gekennzeichnet, dass** an die Stellfläche (29) angrenzende Wandbereiche im Wesentlichen V-förmig verlaufen.

3. Werkzeug nach einem der vorhergehenden Ansprüche, **dadurch gekennzeichnet, dass** V-förmig angeordnete Berührungsflächen (51,51') vorgesehen sind.

4. Werkzeug nach Anspruch 2 oder 3, **dadurch gekennzeichnet, dass** die Be rührungsflächen (51,51') über einen gekrümmten, vorzugsweise kreisbogenförmig gekrümmten Bereich (53) ineinander übergehen.

5. Werkzeug nach einem der Ansprüche 2 bis 4, **dadurch gekennzeichnet, dass** der Krümmungsradius des Bereichs (53) größer ist als der einer Ausnehmung im Grundkörper (4) des Werkzeugs (1), in die das Verstellelement (27; 27') eingesetzt wird.

6. Werkzeug nach einem der vorhergehenden Ansprüche, **dadurch gekennzeichnet, dass** das Verstellelement (27;27') einen zylindrischen Ansatz (35) umfasst.

7. Werkzeug nach einem der vorhergehenden Ansprüche, **dadurch gekennzeichnet, dass** die Einstellvorrichtung (25) ein zweites Verstellelement (27') aufweist, das einer zweiten Seitenfläche der Messerplatte (11) zugeordnet ist und mittels einer Stellschraube (31) gegenüber der Messerplatte (11) verlagerbar ist.

8. Werkzeug nach einem der vorhergehenden Ansprüche, **dadurch gekennzeichnet, dass** die Messerplatte (11) mittels einer die Messerplatte durchdringenden Spannschraube (19) am Grundkörper des Werkzeuges (1) fixierbar ist.

9. Werkzeug nach einem der vorhergehenden Ansprüche, **dadurch gekennzeichnet, dass** die Messerplatte (11) mit Hilfe der Einstellvorrichtung (25) in Richtung der Mittelachse (33) des Werkzeuges (1) verlagerbar ist.

10. Werkzeug nach einem der vorhergehenden Ansprüche, **dadurch gekennzeichnet, dass** die Messerplatte (11) mit Hilfe der Einstellvorrichtung (25) in einem Winkel zur Mittelachse (33) des Werkzeuges (1) verlagerbar ist.

11. Werkzeug nach einem der vorhergehenden Ansprüche, **dadurch gekennzeichnet, dass** die Spannschraube (19) unter Aufbau einer Rückstellkraft quer zu ihrer Längserstreckung durch Verlagern des Verstellelements (27;27') elastisch verformt ist.

## Claims

1. A tool for the precision filing of workpieces, which incorporates at least one knife plate and at least one adjustment device (25) acting on the said knife plate, whereby the same incorporates an adjustment element (27; 27') which extends across a part area of a side surface of the said knife plate (11) as well as a set screw (31), which will offset the adjustment element against the knife plate, **characterised in that** the adjustment element (27; 27') incorporates an adjustment plane (29) which co-operates with the side surface of the knife plate (11) in terms of a flat abutment and which consists of two abutment surfaces (29a, 29b) which are positioned at a distance from one another, wherein the adjustment plane (29) draws an angle of inclination with a centre plane (49) of the adjustment element (27; 27'), said angle of inclination being adjusted to an angle of inclination of the side surface of the knife plate (11), against which the adjustment element (27; 27') rests.

2. A tool according to claim 1, **characterised in that** the wall area adjacent to the adjustment plane (29) extends in a substantially V-shaped direction.

3. A tool according to one of the preceding claims, **characterised in that** the same incorporates contact planes (51, 51') that are substantially V-shaped.

4. A tool according to claim 2 or 3, **characterised in that** the contact planes (51, 51') merge into one another across an arcuate, and preferably a circular arcuate area (53).

5. A tool according to one of the preceding claims 2 to 4, **characterised in that** the radius of curvature of the area (53) is greater than that of a recess that is located within the base body (4) of the tool (1), into which the adjustment element (27; 27') is inserted.

6. A tool according to one of the preceding claims, **characterised in that** the adjustment element (27; 27') incorporates a cylindrical shoulder (35).

7. A tool according to one of the preceding claims, **characterised in that** the adjustment device (25) incorporates a second adjustment element (27'), which is allocated to a second side surface of the knife plate (11), and which can be offset against the said knife plate (11) with the aid of a set screw (31).

8. A tool according to one of the preceding claims, **characterised in that** the knife plate (11) can be affixed to the base body of the tool (1) with the aid of a tension screw (19) which projects through the said knife plate.

9. A tool according to one of the preceding claims, **characterised in that** the knife plate (11) can be offset with the aid of the adjustment device (25) in the direction of the central axis (33) of the tool (1).

10. A tool according to one of the preceding claims, **characterised in that** the knife plate (11) can be offset at an angle against the central axis (33) of the tool (1) with the aid of the adjustment device (25).

11. A tool according to one of the preceding claims, **characterised in that** the tension screw (19) is elastically distorted through the creation of a reversing force across the longitudinal expansion direction of the same through the offsetting of the adjustment elements (27; 27').

## Revendications

1. Outil pour usinage de précision par enlèvement de copeaux de pièces à usiner, comprenant au moins une plaque de coupe et au moins un dispositif de réglage (25) agissant sur la plaque de coupe, qui comprend un élément de réglage (27 ; 27') s'étendant sur une zone d'une face latérale de la plaque de coupe (11) et une vis de réglage (31) déplaçant l'élément de réglage par rapport à la plaque de coupe, **caractérisé en ce que** l'élément de réglage (27 ; 27') présente une surface de fixation (29) coopérant avec la face latérale de la plaque de coupe (11) au sens d'un appui à plat, qui comprend deux surfaces d'appui (29a, 29b) placées à distance l'une de l'autre, dans lequel la surface de fixation (29) inclut un angle d'inclinaison avec un plan médian (49) de l'élément de réglage (27 ; 27') qui est adapté à un angle d'inclinaison de la face latérale de la plaque de coupe (11) sur laquelle l'élément de réglage (27 ; 27') repose.

2. Outil selon la revendication 1, **caractérisé en ce que** des zones de la paroi s'arrêtant sur la surface de fixation (29) s'étendent globalement en forme de V.

3. Outil selon l'une quelconque des revendications précédentes, **caractérisé en ce que** des surfaces de contact (51, 51') disposées en forme de V sont prévues.

4. Outil selon la revendication 2 ou 3, **caractérisé en ce que** les surfaces de contact (51, 51') se chevauchent dans une zone (53) courbée, de préférence courbée en arc de cercle.

5. Outil selon l'une quelconque des revendications 2 à 4, **caractérisé en ce que** le rayon de courbure de la zone (53) est plus grand que celui d'un creux dans le corps de base (4) de l'outil (1), dans lequel l'élément de réglage (27,27') est inséré.

6. Outil selon l'une quelconque des revendications précédentes, **caractérisé en ce que** l'élément de réglage (27 ; 27') comprend une embase cylindrique (35).

7. Outil selon l'une quelconque des revendications précédentes, **caractérisé en ce que** le dispositif de réglage (25) présente un deuxième élément de réglage (27') qui est associé à une deuxième face latérale de la plaque de coupe (11) et qui peut être déplacé à l'aide d'une vis de réglage (31) par rapport à la plaque de coupe (11).

8. Outil selon l'une quelconque des revendications précédentes, **caractérisé en ce que** la plaque de coupe (11) peut être fixée sur le corps de base de l'outil (1) à l'aide d'une vis de serrage (19) traversant la plaque de coupe.

9. Outil selon l'une quelconque des revendications précédentes, **caractérisé en ce que** la plaque de coupe (11) peut être déplacée à l'aide du dispositif de réglage (25) dans la direction de la ligne médiane (33) de l'outil (1).

10. Outil selon l'une quelconque des revendications précédentes, **caractérisé en ce que** la plaque de coupe (11) peut être déplacée à l'aide du dispositif de réglage (25) selon un angle par rapport à la ligne médiane (33) de l'outil (1).

11. Outil selon l'une quelconque des revendications précédentes, **caractérisé en ce que** la vis de serrage (19) est déformée élastiquement suite à la formation d'une force de rappel perpendiculaire à son extension longitudinale par déplacement de l'élément de réglage (27 ; 27').
